Europäisches Patentamt

European Patent Office

Office européen des brevets

(19)

(11) Publication number: **0 300 408 B1**

## EUROPEAN PATENT SPECIFICATION

(12)

(45) Date of publication of patent specification: **04.03.92**   (51) Int. Cl.⁵: **A01K 47/04**

(21) Application number: **88111525.7**

(22) Date of filing: **18.07.88**

(54) **Process for obtaining honeycombs of simple or compound wax.**

(30) Priority: **20.07.87 ES 8702373**
     **01.06.88 ES 8801734**

(43) Date of publication of application:
    **25.01.89 Bulletin  89/04**

(45) Publication of the grant of the patent:
    **04.03.92 Bulletin  92/10**

(84) Designated Contracting States:
    **DE FR GB IT**

(56) References cited:
    **GB-A- 222 365**
    **US-A- 3 182 339**

(73) Proprietor: **Ferrer Vidal, Carlos**
    **114 Tarragona Street**
    **E-08015 Barcelona(ES)**

(72) Inventor: **Ferrer Vidal, Carlos**
    **114 Tarragona Street**
    **E-08015 Barcelona(ES)**

(74) Representative: **Canela Bresco, Arturo**
    **Gabinete Canela, Calle Aragon 346, pral. B**
    **E-08009 Barcelona(ES)**

EP 0 300 408 B1

## Description

The object of the present Invention Patent refers to a process for obtaining simple and/or compound wax honeycombs.

In the beekeeping industry two types of honeycomb are currently used: one moulded of plastic material and the other one of wax sheets imprinted on both surfaces, with only engraving of the hexagons for the subsequent operation to be carried out by the bees inside the beehive, on the waxy walls of the parallelepiped of hexagonal section which will constitute each cell.

In the first case, the honeycomb moulded in rigid plastic material have the disadvantage of the bees being inclined to reject them because of the very rigidity of the material and unpleasant odours given off by the solvents used in their formation (granular raw material for subsequent fluidification by heat and moulding), odour given off due to the very nature of the plastic and aggressiviness of the rough and rigid surface of the honeycomb once moulded, all this in addition to the thermic problems of a mass made of rigid plastic material which does not have the necessary ductility of wax, and the internal variations of a "live" beehive.

To persuade bees to accept honeycombs moulded in rigid plastic material, beekeepers resort to the trick of using a thin waxed layer impregnated with substances which give off familiar odours attractive to bees.

In practice, obtaining and finishing of moulded rigid plastic material honeycombs is not very reliable, for when it is least expected the bees discover the deception, rejecting the construction and leading the swarm to go on strike.

Another technical problem is that the moulded rigid plastic material, as indicated above, does not have the sensitivity to heat possessed by wax, where on hot summer days heat accumulates inside the hive, heat which is beneficial for the seed and larvae inside the reproductive cells. As the wax cell walls begin to soften due to excess heat, this softening warns the bees that this optimum due to excess heat, which has been reached must not be exceeded, for otherwise the seed and larvae will be killed by excess heat, as will the cells.

This property of wax is not possessed by moulded plastic honeycombs. As there is not softening of the plastic walls prior to fusion, the bees receive no warning and do not carry out forced air ventilation of the hive to move the air and establish forced air cooling to keep the optimum temperature for healthy procreation.

As regards obtaining wax honeycombs with only the outlines of the hexagons imprinted, but not having raised parallelepiped cell walls, these honeycombs which are partially industrially manufactured have another great problem in industrial performance in beehive honey.

This problem is obvious if it is borne in mind that bees use approximately 10 kg of honey to obtain 1 kg of wax.

It is clear that using wax walls engraved by imprinting and without raised cells walls represents a great loss of money and time for the industrial beekeeper, for the wax for construction of these walls must be supplied and put in position by the bees, so that they finish the honeycomb partly constructed by industry.

The large amount of money not earned for the amount of honey which is not obtained because the bees are devoting themselves to "in situ" construction of the cell walls means that the apiculturist reuses from one season to the next the honeycombs already centrifuged for extraction of honey.

This practice saves using new sheets of printed wax, and therefore avoids the bees devoting themselves to constructing the cell walls of a new honeycomb. There is the disadvantage, however, that after a while micro-organisms develop within the hive, attacking the health of the seed, larvae and bees, and even creating wax-eating larvae.

These micro-organisms are a real plague, decimating the bee population with extraordinary virulence in a beehive and in hundreds of hives for many kilometres all around, for the bees carry such micro-organisms on their collection tasks, and inoculate the flowers to which other bees from other hives subsequently go.

When this happens -and it currently happens very frequently- the hives and all their contents have to be burned.

Thus from the health point of view it is better not to reuse honeycombs from one season to the next, though this is difficult because of the problems mentioned above.

To overcome this problem, complete honeycombs are also made industrially, but then another problem arises, being the easy breakage of the wax cells in the demolding phase of the molded cells of the honeycomb.

As it is well known, the walls of the cells are thin and relatively high and therefore very frail. Due to that those wall cells break easily during demolding of the honeycomb because the molded wax adheres to the mold.

To avoid this problem US Patent Nr. 3.182.339 of Ellis et al. was applied.

With its aim his creator intended to avoid the breakage of the complete molded wall wax cells. To do so, Mr. Ellis changed the shape of the cells. From a parallelepipedical form with hexagonal base he passed to tapering hexagonal cells. This realisation has two great problems.

Firstly in practice the cells made with this tapering method also break when demolding. Once the wax wall cells are molded the wax adheres to the fingers of the mold and when the molded honeycomb is taken off from the mold with a non uniform force applied to the fingers by the person demolding the honeycomb, the thin and frail wax cells tear because on certain points of the wax wall cells there is more adhesion to the mold than in other points of the same cells. Such different traction forces create the breakage of the frail wax cells. In each thus molded honeycomb there is a great number of broken cells.

Secondly the tapering shape of cells is not accepted by the bees.

Ancestrally bees make the wax cells of the honeycombs with a parallelepipedical shape and with a hexagonal base. For them it is antinatural to change the shape of the cells.

Thirdly, in the tapering cell shape of the U.S. Patent 3.182.339 the thickness of the cell wall is bigger in the base of the cell than on the top of the cells.

This shape results in a bigger mass of wax on the base of the cell than in its top.

This difference in thickness of the cell walls results in a different sensibility to soften as soon as the temperature in the beehive increases. When the bees eventually sense the softening of the wax cells which is delayed due to the differing thickness of the wax walls, the heat would have exceeded the optimum temperature within the beehive and the seeds and larvae would have died.

With US Patent No. 3.182.339 it is not possible to obtain exactly parallelepipedical cells with a hexagonal base without breaking their walls, because they cannot be taken out of such a mold.

In the object of this application, the separation of the fingers from the wax walls of the cells is arrived at by making these fingers of an elastic material, which contracts when cooling down. This contraction is done with the same force on the whole perimeter of each finger. Then a small and uniform tension is distributed in a radial sense through all the points of the cell, which tension is compensated by the radially opposite one.

The total of those little tensions give a regular separating tension sufficient to obtain automatically the demolding without breaking the wax wall cells.

Then with this method simultaneous strong radial, axial and diagonal tensions are not created, which happen when the demolding is done by pulling the mold off the cells by the hand of the demolding worker.

The object of the invention is to avoid such problems. As it can be seen from the description given as a nonbinding example, this is a process to obtain honeycombs for hives. This is specified below, with two sheets of drawings on which:

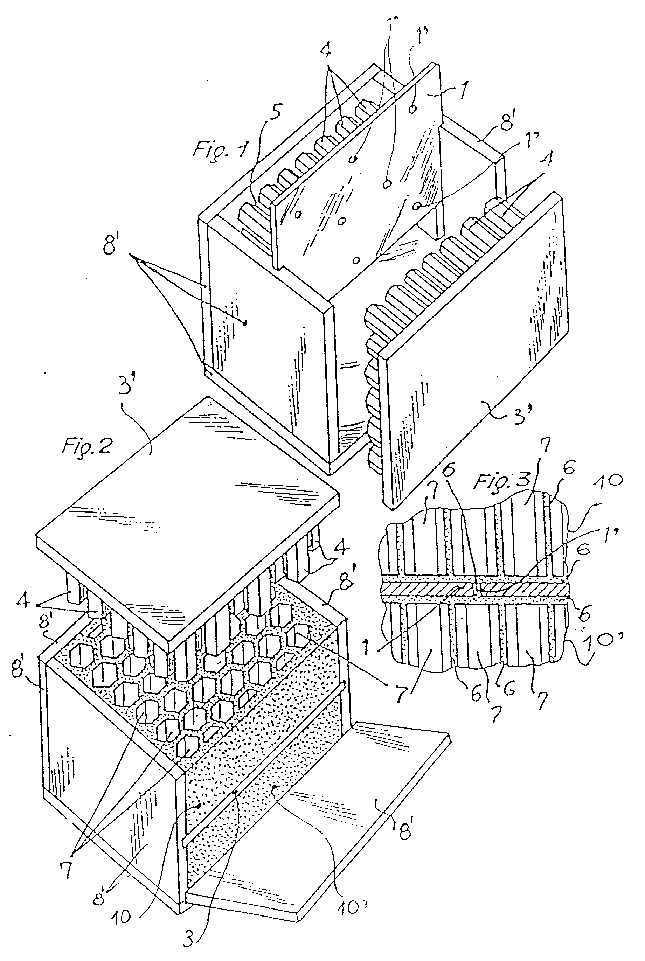

Figure 1 gives a sketch of the elastic mould, partially closed, with the core of the honeycomb to be molded partly introduced, and for greater clarity not showing the flask support of the elastic mold walls.

Figure 2 shows the elastic mould of figure 1, at the phase of demoulding of the already obtained wax honeycomb.

Figure 3 is a larger-scale sectioned detail of a piece of honeycomb obtained by the process.

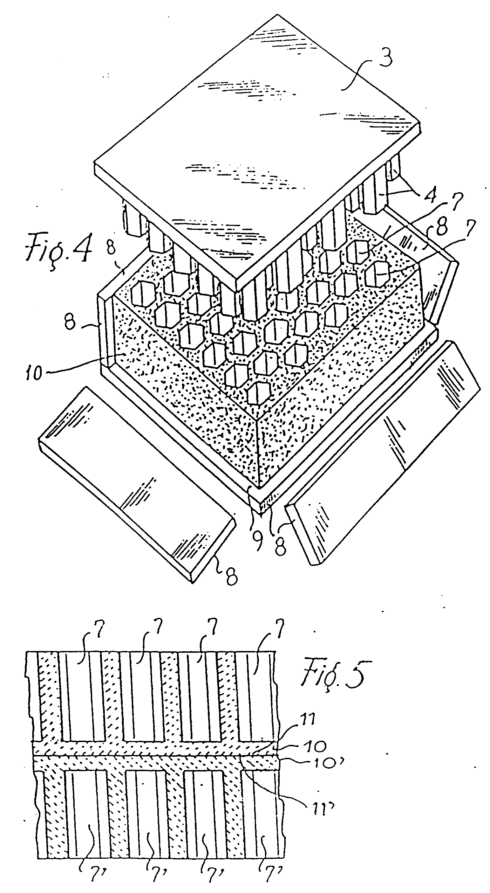

Figure 4 is a schematic representation of the demoulding operation of a single wax body obtained with complete wax cells on only one surface, and figure 5 shows a complete honeycomb, with two bodies, similar to figure 4, backed on to each other and permanently joined by the faces with no cells, forming a single composition body with complete cells on either opposing faces.

The invention consists in taking a core (1) of suitable slightly flexible material, preferably with perpendicular orifices (1') passing from one side to the other laid out inside a mould (3', 8') with smooth, polished, non-adhesive internal surfaces of an elastic material that dilates under heat and contracts when cooled; materials such as silicone elastomers or other suitable ones can be used, with walls (3', 8') of the elastic mold being held up by external rigid flask walls (not shown) which are hinged for opening and closing. The elastic mold (3', 8') has finger shaped projections (4) on two opposing walls of the mold (3') which are a multiplicity of parallelepiped elastic finger shaped patterns of hexagonal section, duly juxtaposed and close to each other; they do not touch, however, so that a perimeter space (5) is left between each finger shaped projection (4), thus forming a chamber into which the fusion wax (6) can be introduced. Once set by cooling, the finger shaped projections (4) contract due to loss of heat, coming away from the wax cells (7) thus formed by moulding on the support core (1); these are permanently linked, and they are covered in the same moulding operation with the appropriate layer or wax, with the support core sheet (1) and the cells (7) forming an inseparable whole, so that with the contraction of the mass of contractible material of the mold (3', 8')) and the erectability of the finger shaped projections (4) reduction of its size is achieved, thus facilitating its withdrawal from the interior of the formed wax cells (7).

With the process of the invention we obtain honeycombs of simple or compound wax, with complete cells (7) done, but during the demoulding phase, it has been found that, owing to the central support sheet (1) having on each face the corresponding cells (7) of total configuration and height, the simultaneous existence of two opposing walls with finger shaped projections in the mold (3) and their withdrawal at the same time made such an operation difficult, and sometimes led to breakage of the walls of the little cells due to differences of applied traction stresses.

To avoid this, the honeycombs are designed to be of a composition (fig.5), made up of two equal honeycombs (10 and 10') with complete cells (7) on only one face, while the opposite face has none. The honeycombs thus constructed are put together with their faces with no cells (7) against each other, linked permanently together to form a single sandwich, which then has cells (7) on the two opposing faces (10 and 10').

With this method of making the composition honeycombs, the central support sheet is suppressed as being unnecessary, since the surface from which the cells (7) emerge is obtained in the same operation as the moulding of the cells. To facilitate the honeycombs demoulding, one of the two semimoulds (3) of plastic, elastic, contractible material, is suppressed, while the mold is made in the form of a tray with side walls (8) detachable when wished, and a fairly elastic semimould (3) is arranged over the mouth of the tray, ensuring that the elastic and contractible finger shaped projections (4) do not reach the bottom (9) of the tray; this so that between the free ends of the elastic finger shaped projections (4) and that bottom (9), the wax which is introduced and which fills the cavities and interstices, when it has set and is demoulded by withdrawal of the elastic and contractible finger shape projections (4), forms a wax body from one of the faces of which there emerge the cells (7), fully formed and concordant in height and section with natural ones made by bees, while the opposing face (11) has no cells. By juxtaposing two half bodies (10 and 10') thus obtained by their surfaces (11 and 11') which have no cells, they are linked together, forming a total composition body with the two surfaces having totally formed cells (7 and 7'), facing outwards.

## Claims

1. PROCESS FOR OBTAINING WAX HONEYCOMBS comprising: forming a mold having smooth non-adhesive internal surfaces, in the form of a rigid tray with detachable side walls (8) and a semimold (3) arranged over the mouth of the tray, the semimould (3) being of an elastic material which dilates under heat and contracts when cooled and with a multiplicity of parallelepiped, elastic finger shaped projections (4) of hexagonal section extending partially into said mold, juxtaposed but not touching so that a perimeter space is left between said projections (4);

   pouring molten wax (6) into said mold with dilation of said elastic material (3), and allowing said wax (6) to cool and solidify with contraction of said elastic material (3); and

   removing said semimould (3) from said solidified wax (6) in the form of a honeycomb, having thus a multiplicity of hexagonal ccells (7) corresponding to the projections (4) in at least one face.

2. Process according to claim 1, wherein the tray is not rigid but has its side walls (3', 8') of an elastic material which are held up by external rigid walls, which are hinged for opening and closing, with the remaining two opposed walls as the semimoulds (3, 3') having said projections (4), said opposed projections (4) being separated by a space in the mold;

   interposing in said space a flexible support sheet (1) perpendicular to and not in contact with said projections (4);

   pouring said molten wax (6) in said mold with the support sheet (1) so that the support sheet (1) is incorporated in the honeycomb when removed from the mold.

3. Process according to claim 2, wherein said support sheet (1) includes orifices (1') passing therethrough.

## Revendications

1. PROCÉDÉ POUR L'OBTENTION DE RAYONS DE CIRE SIMPLE ET/OU COMPOSÉ comprenant: la formation d'un moule aux surfaces internes lisses, polies et anticollantes en forme de plateau rigide aux parois latérales articulables (8) et d'un semi-moule (3) en matière élastique qui se dilate sous la chaleur et se contrcte en se refroidissant, présentant une multitude de projections en forme de doigts élastiques, parallélépipédiques, à la section hexagonale s'étendant partiellement à l'intérieur de ce moule, juxtaposées mais sans arriver à se toucher entre elles de façon qu'il y a un espace périmétral entre ces projections;

   L'introduction de la cire fondue (6) dans ce moule à dilatation du matériau élastique susmentionné (3) permettant que cette cire (6) se refroidisse et se solidifie avac contraction du matériau élastique cité (3); et

l'extraction de ce semi-moule (3) de la cire solidifiée (6)en forme de rayon de cire, obtenant ainsi une multitude de cellules hexagonales (7) correspondant aux projections (4) sur au moins une face.

2. Procédé selon la revendication 1, où le plateau n'est pas rigide mais dont les parois latérales (3', 8') sont en matière élastique se soutenant par des parois rigide externes, qui s'emboîtent pour leur ouverture et fermeture avec les autres parois opposées comme les semi-moules (3, 3') qui ont les projections mentionnées (4), celles-ci étant séparées par les projections (4) par un espace dans le moule;

On interpose dans cet espace une lame flexible de support (1) perpendiculaire et non en contact avec ces projections (4);

On introduit la cire fondue (6) dans ce moule avec la lame de support (1) de façon que la lame de support (1) s'incorpore au rayon de cire lors du démoulage;

3. Procédé selon la revendication 2, où la lame de support citée (1) présente des orifices de passage (1') perpendiculaires.

**Patentansprüche**

1. PROZESS ZUR GEWINNUNG VON EINFACHEN UND/ODER GEMISCHTEN WACHSPLATTEN. Er beinhaltet: Erstellen einer Form mit glatten und sauberen Innenseiten, die auch nicht anhaften, in Form einer steifen Schale mit klappbaren Seitenteilen (8) und einer Halbform (3) aus elastischem Material, welches sich durch die Hitze ausdehnt und beim Abkühlen schrumpft und welche eine Vielzahl von Projektionen in Form von elastischen Fingern, parallelepipedisch, mit sechseckigem Querschnitt, die sich teilweise in der Form ausbreiten, aneinandergereiht, aber ohne sich gegenseitig zu berühren, so dass ein perimetraler Raum zwischen den Projektionen entseht;

das Einfüllen des flüssigen Wachses (6) in die besagte Form mit Ausdehnung des erwähnten elastischen Materials (3), welches erlaubt, dass sich das Wachs abkühlt und versteift, wobei das elastische Material schrumpft (3); und

das Herausnehmen der besagten Halbform (3) aus dem nun soliden Wachs (6) in Form einer Wachsplatte, wobei man eine Vielzahl von sechseckigen Zellen (7) erhält, die der Projektion von mindestens einer Seite entspricht.

2. Prozess wie Anspruch 1, wo aber die Schale nicht steif ist, sondern deren Seitenwände (3', 8') aus elastischem Material bestehen, welches durch steife Aussenwände gestützt werden und die zum Öffnen und Schliessen mit den beiden restlichen, gegenüberliegenden Seitenwänden verbunden werden, wie die Halbformen (3, 3'), welche die besagten Projektionen (4) haben, wobei diese Projektionen (4) durch einen Raum in der Form getrennt sind;

Einfügen einer senkrechten, flexiblen Stützfolie (1) in den besagten Raum, welche nicht mit den Projektionen (4) in Berührung kommt;

Einfüllen des flüssigen Wachses (6) in die besagte Form mit der Stützfolie (1), so dass die Stützfolie in der Wachstafel integriert ist, wenn diese aus der Form entnommen wird;

3. Prozess wie Anspruch 2, wo die Stützfolie (1) senkrechte, durchgehende Öffnungen (1') aufweist.

Fig. 1

Fig. 2

Fig. 3

*Fig.4*

*Fig.5*